# EUROPEAN PATENT APPLICATION

(11) **EP 3 280 189 A1**
(43) Date of publication of application: **07.02.2018**
(21) Application number: 16182239.0
(22) Date of filing: 01.08.2016
(51) Int. Cl.: H04W 48/16

(54) **METHOD FOR SELECTION OF A RADIO ACCESS NETWORK**

(71) Applicant: Gemalto M2M GmbH, 81541 Munich (DE)
(72) Inventor: SIMON, Carsten, 16761 Hennigsdorf (DE); WENDLER, Ralf, 14612 Falkensee (DE); WESTERKOWSKY, Frank, 10717 BERLIN (DE); ULRICH, Thomas, 67098 Bad Dürkheim (DE)
(74) Representative: Grevin, Emmanuel

(57) **Abstract**

The present invention relates to a method for selection of a radio access network by a wireless device comprising limited radio access network capabilities, the method comprising the steps of, for the wireless device:
- carrying out a power scan in at least one frequency band for receiving power scan values from a plurality of channels of said frequency band,
- comparing received channels power scan values with a predefined radio access network power pattern of at least one radio access network, the wireless device is not designated to operate with,
- in case received power pattern matches with said predefined radio access network power pattern, decreasing the priority of said plurality of channels
- maintaining an evaluation list of channels including at least one scaled value considering priority and power scan value,
- testing decoding only on a subset of channels out of the evaluation list comprising those channels that provide the highest scaled value considering values power scan values taking into account said determined priority.

## Description

### FIELD OF THE INVENTION

The present invention relates to a method for selection of a radio access network by a wireless device.

The invention also pertains to a wireless device using said method.

### BACKGROUND OF THE INVENTION

In the field of wireless cellular communication meanwhile a couple of technology standards have evolved, typically named with an increasing generation number: 2G, 3G, 4G, each covering different technology variants. Nonetheless, each of these generations represent a radio access network of a network operator, whereby each radio access network comprises base stations, (which are called nodeBs in 3G and eNodeBs in 4G, for simplicity reasons through this document all are called base stations) according to the respective 3GPP technology standard.

In today's wireless device landscape typically all mobile handsets support at least 2G and 3G, and the more advanced (and pricy) ones also 4G. Generally the user prefers to operate in the highest available radio access network in order to get the best data throughput for data services.

In the field of machine type communication (MTC) however the situation is quite different. Here the connectivity capabilities are selected based on the required network service and the required transmission capacity. For instance a metering device which once a day sends a data package of a few hundred bytes would probably not be equipped with the latest technology. Hence such wireless devices as an example are still only capable of one technology, preferably the least expensive one, like 2G resp. GSM/GPRS, but also recently introduced narrowband technology standard variants.

With the advent of new technologies like 4G and beyond, the network situation is getting more complex, but still such wireless device need to register e.g. on a 2G base station only, as it cannot operate with a base station of another technology. That also means, that if no signals from such a 2G base station can be detected in the air interface, the wireless device will not be able to operate in the 2G radio access network, as no fallback solution is available.

Such situation may also occur, when an appropriate base station is not available in sufficient proximity to the wireless device. Moreover it is the problem that the standardized and mandatory base station acquisition procedure in some situations reveals no appropriate base station, although it is available.

This is because the 2G-capable wireless device uses for a power scan a 200 kHz raster spacing to scan all frequencies / channels within a given band for power, and assumes - for any channel where power has been found - that a GSM channel may exist there. According to the standardized procedure the wireless device is supposed to try decoding only a limited number of 30-40 of the scanned channels considering their power, in dependence of the frequency band. On the other hand a base station operating under 3G or 4G usually blocks 25 resp. up to 100 adjacent channels with constantly comparably high power scan values.

Should a 3G or 4G base station be positioned in proximity of the receiving wireless device that way, that many of its channels are received with higher power scan values than those of the next 2G base station, then an attempt of the wireless device to decode the 30-40 strongest received channels will not reveal a decodable 2G channel. For a wireless device which only is capable of camping on a 2G base station this would mean it cannot find an appropriate base station.

The same problem will also occur with future narrowband technologies which are currently under definition like LTE CAT-M, NB-loT etc.

The disadvantage of this situation is obvious. In the case of purely carrying out the standardized procedure the wireless device would behave as if it is in an out-of-service area. This is all the more disadvantageous for a stationary deployed wireless device like a meter or home security device, as the described situation cannot be resolved by simple moving away from such areas.

But also workaround solutions like simply decoding each channel and checking if it is decodable and assigned to a network operator which the wireless device is authorized to use, can merely mitigate the situation, as this is a lengthy and power consuming procedure, which moreover does not comply with the 3GPP technology standard.

It is therefore the goal of present invention to overcome the mentioned disadvantages and to propose a solution for an improved selection of radio access network by a wireless device.

Further alternative and advantageous solutions would, accordingly, be desirable in the art.

### SUMMARY OF THE INVENTION

For this it is according to a first aspect of the invention suggested a method to operate a wireless device according to claim 1. It is further suggested according to a second aspect of the invention a wireless device according to claim 8.

According to the first aspect of the invention it is proposed a method for selection of a radio access network by a wireless device comprising limited radio access network capabilities, the method comprising the steps of, for the wireless device:
- carrying out a power scan in at least one frequency band for receiving power scan values from a plurality of channels of said frequency band,
- comparing received channels power scan values with a predefined radio access network power pattern of at least one radio access network, the wireless device is not designated to operate with,
- in case received power pattern matches with said predefined radio access network power pattern, decreasing the priority of said plurality of channels
- maintaining an evaluation list of channels including at least one scaled value considering priority and power scan value,
- testing decoding only on a subset of channels out of the evaluation list comprising those channels that provide the highest scaled value considering values power scan values taking into account said determined priority.

The inventive method is designated for a wireless device for operating in a cellular network by means of a radio access network. The cellular network comprises at least two different radio access networks and a plurality of base stations, which are at least configured to support one of the radio access networks. Each radio access network is typically representing one technology standard for wireless communication, in particular 2G (GSM, GPRS, EDGE), 3G (UMTS, HSDPA, HSUPA, HSPA), 4G (LTE, LTE-A, LTE CAT-M, NB-loT) etc. A base station for 3G networks is usually called nodeB, and for 4G networks eNodeB. For the sake of simplicity in the following the term base station is used for all of these embodiments.

The base stations represent the interface for wireless devices operating in the cellular network. They typically comprise transmitter circuitry and receiver circuitry, resp. a combination of both in transceiver circuitry, at least one antenna, processing circuitry and preferably memory at least for storing configuration data and computer programs being executed by the processing circuitry.

The base stations are connected to radio access network components, in particular server hardware, of the cellular network. Further the radio access network components have access to the core network of the cellular network, where additional servers and databases are present, in particular comprising subscriber access information.

Each base station typically has assigned a frequency area for uplink and for downlink communication, in some embodiments this frequency area is shared for uplink and downlink. Within the frequency range for the downlink the base station transmits signals via its transmitter circuitry and antenna, the signals conforming to the supported technology standard.

The wireless device comprises limited radio access network capabilities, which means that it is configured to only operate in a subset of the available technology standards supported by the cellular network. In particular this means a wireless device is capable of accessing exactly one radio access network, or a flavour thereof, typically one of an earlier generation, like 2G, or a technology standard which requires less hardware resources like NB-IoT (Narrowband-Internet of things, a sub-standard of LTE, resp. LTE CAT-M). Such wireless devices in particular are machine-type communication devices (MTC), which are dedicated for exchanging only a low amount of data, like a metering device which daily sends measured data to a remote server. For such devices it is fully sufficient and from a cost perspective preferable to only support one radio access network, in particular 2G. For those wireless devices it is even more disadvantageous not to find a 2G base station at certain locations, as they are typically stationary and therefore stuck in such situations where no access to the supported technology standard is available.

But the problem is also imminent for emergency call boxes in a vehicle, which often only support 2G networks for circuit switched call establishment. For such wireless devices it is a critical situation, when after an accident or breakdown it is tried to access a public-safety answering point, but no access to the supported radio access network is possible at that place.

It is in particular a problem, when base stations of not-supported technology standards are situated closer to the wireless device, or are received with higher signal strength.

Normally the wireless device is according to the standard supposed to scan all frequencies resp. channels in the frequency range its receiver is configured to operate with. The channels with the best signals are selected. Then each of them is tested if it a) can be decoded and b) belongs to a cellular network, where the wireless device is eligible for accessing, which means in most cases if it is the home network.

If none of the selected best channels fulfils both tests, the wireless device is out of service.

Here the inventive method comes into play. According to that, the method comprises as a first step a power scan in at least one frequency band. This is typically the full frequency band supported by the receiving circuitry of the wireless device, or at least a subset of it.

The power scan results in power scan values for a plurality of channels of said frequency band, preferably all channels. Such power scan results are measured in a convenient way, and are then stored in memory with a channel identifier.

Now instead of simply searching for the channels with the highest power scan values it is first carried out a processing step for avoiding irrelevant channels. For that it is carried out a pattern matching for identifying channels belonging to radio access networks the wireless device is not able to operate with.

Such pattern matching comprises in particular an analysis of a couple of adjacent channels altogether, and an identification if these channels have a typical progression or correlation.

For the case of 3G or 4G radio access networks it is typical due to the frame structure of this standard supporting code division multiplexing that, if averaged, all channels of a frequency band of a base station provide a similar power scan value on a rather high level.

The pattern matching algorithm of the inventive method therefore is foreseen to figure out such a radio access network pattern and take into account if a channel belongs to this section of the frequency band. For such identified channels then a low priority value is assigned.

Preferably this is carried out by an evaluation list which comprises a scaled value which considers both the priority value and the power scan value.

One preferred implementation of said comparing predefined radio access network power pattern comprises stepwise comparing a consecutive line of channels, comprising the step of:
- determining a variability index per channel by comparing the power scan value of the evaluated channels with the power scan value of at least one channel in an adjacent frequency,
- identifying a matching between radio access network power pattern, when the variability index is below a predetermined threshold,
- determining said scaled value in the evaluation list considering said priority taking into account said variability index.

According to this preferred embodiment the channels of the frequency band are stepwise analysed. As part of this operation a variability index is determined per channel based on a comparison of the power scan value with the power scan value of at least one adjacent channel. Preferably one or more channel before and after the analysed channel is considered for this determination.

The variability index indicates if the analysed channels and the at least one adjacent channel provide different power levels. The higher the difference, the higher is the variability index.

In case of more than one channel for comparison preferably the difference between the power scan value of the analysed channel and the average of the power scan values of the comparison channels is determined and taken as a basis for the variability index. For simplicity reasons the average also includes the power scan value of the analysed channel itself. This means that with this embodiment a sliding window of channels is analysed and leads to a variability index for the currently central channel of the window.

Alternatively the variance or the standard deviation of the power scan values of a plurality of adjacent channels is used for determining the variability index.

The variability index is then used for determining the priority of the analysed channel, preferably by taking into account a threshold value and consequently prioritizing down a channel with a variability index lower than the threshold value.

If the variability index is below said threshold value, it indicates that the power scan value pattern comprises a practically constant power scan value. Practically constant thus means only variations of a few percent, which is typical for a block of code division channels.

With this preferred analysis step a pattern matching is carried out and directly leads to a priority value for each channel, which is considered for the scaled value assigned to each channel of the frequency band, and held in the evaluation list.

A channel which matches the pattern has a low scaled value and will most probably not be evaluated for decoding.

Consequently the testing of the best channels is carried out by the wireless device by means of the evaluation list, whereby the channels with the highest scaled values are considered for testing decoding.

As part of the technology standard a predetermined number of channels is evaluated after the power scan, for 2G this value is 30 or 40. It is preferable to also analyse this number of channels based on the evaluation list as well. With this inventive method it is assured that even though a wireless device supporting one technology standard is situated close to a base station of another standard, the wireless device is able to operate in the radio access network of the supported technology standard.

Furthermore the improved method compared to the one to the standard does not comprise a material change on the wireless device, as it starts with the same power scan and results in a limited list of channels for decoding, as it is the case for the known method. Hence, in terms of performance no remarkable disadvantages appear, as no additional measurements are necessary. This also leads to no deterioration of the power consumption compared to the standard method.

This results in the situation that the wireless devices supporting lower standards will find an appropriate radio access network, if the respective base station is nearby.

In another preferred embodiment it is suggested a method wherein comparing received power scan values with the predefined radio access network power pattern comprises considering power scan values of at least one channel from a plurality of consecutive power scans, comprising the step of:
- determining a variability index per channel by comparing the power scan value of the evaluated channel with at least one previously received power scan value of said channel,
- identifying a matching between the radio access network power pattern, when the variability index is below a predetermined threshold,
- determining said scaled value in the evaluation list considering said priority taking into account said variability index.

With this embodiment the pattern matching is based on power scan values in the time domain. That means, a plurality of consecutive power scan values for a channel is taken into account for determining a variability index. According to that the wireless device preferably stores the recent power scan values in a memory. Preferably the power scans are carried out over each channel of the respective frequency band.

For determining the variability index as part of the pattern matching procedure the stored previous power scans and the current power scan for a respective channel is taken into account. Comparable to the determination of the variability index among channels, that means in the frequency domain, here a comparison of the power scan values over time is taken into account. Typical operations comprise an average of the measured power scan value and the difference of the latest measurement with the average is carried out. Alternatively the variance or standard deviation is used.

Consequently in case of a low variability index the priority of the channel is preferably scaled down, provided the variability index is below a given threshold.

A continuous power scan value with low variability on a comparably high power level is an indication for a 3G channel, as here the code division multiplexing is used. On the other hand, also the GSM beacon channel C0 has due to power control measures a very low variability over time. As this GSM beacon channel is in fact a channel with on the one hand a high power level and on the other hand is preferably used for synchronising on a 2G base station, it would be disadvantageous to reduce the priority of this channel.

Therefore it is further advantageous to conduct a combination of the previously mentioned embodiment wherein the variability index relating to the adjacent channels, and the variability index relating to the time is considered. With this combination the GSM beacon channel is easily detected, as it has presumably a high variability index in the frequency domain and a low variability index in the time domain.

For distinguishing 4G networks it is also advantageous to consider both the variability along the channels and in the time domain. Here it is proposed to identify the typical pattern of a high variability along the channels, while a central channel - which is the master information block MIB - has a very low variability over the time. The MIB may have a lower or higher power level than the channels around.

When this pattern is identified, then the affected channels will be prioritized down.

With the calculated priority the scaled value for this channels is determined and stored in the evaluation list.

In a further preferred embodiment it is suggested a method further comprising the step of comparing received channel power scan values with a second power pattern of radio access networks the wireless device is designed to operate with, in case received power pattern matches with said second power pattern, increasing the priority of said plurality of channels. This preferred embodiment comprises a comparison with a second power pattern, which is typical for the radio access network the wireless device is configured to operate with. Depending upon the supported radio access network such a pattern would be individually defined.

The concept is basically comparable to the previous pattern matching method, with the difference that now a matching to the pattern leads to an increase of priority of the respective channel.

Additionally the method is appropriate for coming standards dedicated for MTC devices like NB-loT, which is typically a very small amount of channels with a typical pattern.

Preferably the method carries out a combination of both steps, that means a pattern matching for scaling down channels matching to not supported technology standards and scaling up channels found to be matching to supported technology standards. This is advantageous as it leads to better results.

As one further embodiment it is suggested that said second power pattern comprises in case variability index is above a predetermined threshold indicating strong differing power scan values of consecutive channels.

This embodiment is in particular appropriate for wireless devices operating in 2G technology standards like GSM, EDGE etc. This embodiment is dedicated for identifying a high variability index and to discriminate such channels with low or medium variability index by means of the predetermined threshold. This approach is useful when the variability index of a set of channels with code division is nevertheless less constant than normal, which then leads to a medium variability index. This could result in unsharp results. An increase of priority of those channels with a high variability index however leads to a clear distinction and hence on-spot detection of the appropriate channels for decoding.

In another preferred embodiment it is proposed the method wherein a channel is not considered for the step of testing decoding under the condition of at least one of the group of:
- the power scan value of said channel is below a predetermined level of noise,
- the priority of the channel is below a predetermined level.

With this embodiment it is simplified the handling of channels and additional reduction of possible channels from the read frequency band.

First the channels with a low power level are sorted out, which is the case in case a predetermined noise level is not or just reached. On such a level a decoding of the channel would anyhow be useless. Nevertheless it could result in a high variability index and thus a high priority from the previous steps. Ruling out that such channels where unsuccessful decoding can be anticipated, prevents allocating a place on the evaluation list of channels. This is moreover advantageous in case of a large frequency band.

Further a calculated low priority level is preferably an indication not to pursue this channel, for the purpose of sorting out such channels even though they might provide a very high power level. When the priority is found to be very low due to the previous pattern matching operations, then a high power level cannot overrule this finding, and consequently the channel is sorted out. The predetermined level is a question of testing in which area very reliable priority values are found and which level they reach.

According to a second aspect of the invention it is proposed a wireless device configured to operate in a radio access network, the wireless device comprising a processing circuitry, a memory and a transceiver circuitry configured to provide limited radio access network capabilities, wherein the transceiver circuitry is configured:
- to carry out a power scan in at least one frequency band for receiving power scan values from a plurality of channels of said frequency band,
further the processing circuitry is configured:
- to compare received channels power scan values with a predefined radio access network power pattern of at least one radio access network, the wireless device is not designated to operate with,
- to decrease the priority of said plurality of channels, in case received power pattern matches with said predefined radio access network power pattern,
- to maintain in said memory an evaluation list of channels including at least one scaled value considering priority and power scan value,
- to instruct transceiver circuitry to test decoding only on a subset of channels out of the evaluation list comprising of those channels that provide the highest scaled value considering values power scan values taking into account said determined priority.

The second aspect shares the advantages of the first aspect.

It relates to a wireless device for operating in a radio access network. It comprises a processing circuitry, transceiver circuitry, resp. a transmitter and a receiver for wireless signals, and a memory. The wireless device further preferably comprises at least one antenna connected to the transceiver circuitry and a subscriber identification module (SIM-Card), in particular a Universal Integrated Circuit Card (UICC), comprising the subscriber authentication data for being eligible of operating in the cellular network. The transceiver circuitry is consequently configured to carry out the power scan in at least one frequency band, which is preferably the whole range addressable by the transceiver circuitry. This operation results in the power scan values for the channels of said frequency band. Preferably these values are stored in memory, in particular volatile memory.

The processing circuitry is configured to operate with the stored data, in particular carry out a comparison with a predefined radio access network power pattern which leads to a priority value for each channel, whereby a matching with the pattern leads to a reduction of the priority. The priority value together with the power scan value is considered by the processing circuitry for determining the scaled value of the channels in the evaluation list stored in the memory

For the channels with the highest scaled values in the evaluation list then the transceiver circuitry is instructed by the processing circuitry for testing if the selected channel can be decoded.

As it is shown this invention advantageously solves the depicted problem and provides a solution which allows for a wireless device with limited radio access network capabilities to synchronize on a base station of the supported radio access network although base stations of other unsupported radio access networks are situated nearby.

### BRIEF DESCRIPTION OF THE DRAWINGS

The following description and the annexed drawings set forth in detail certain illustrative aspects and are indicative of but a few of the various ways in which the principles of the embodiments may be employed. Characteristics and advantages of the present invention will appear when reading the following description and annexed drawings of advantageous embodiments given as illustrative but not restrictive examples.
- Fig. 1: represents a wireless device of the type to which the present invention is applied as an embodiment operating in an environment of a cellular network;
- Fig. 2: shows the results of a power scan over a frequency band;
- Fig. 3: shows an exemplary embodiment of the processing with the power scan results according to the inventive method.

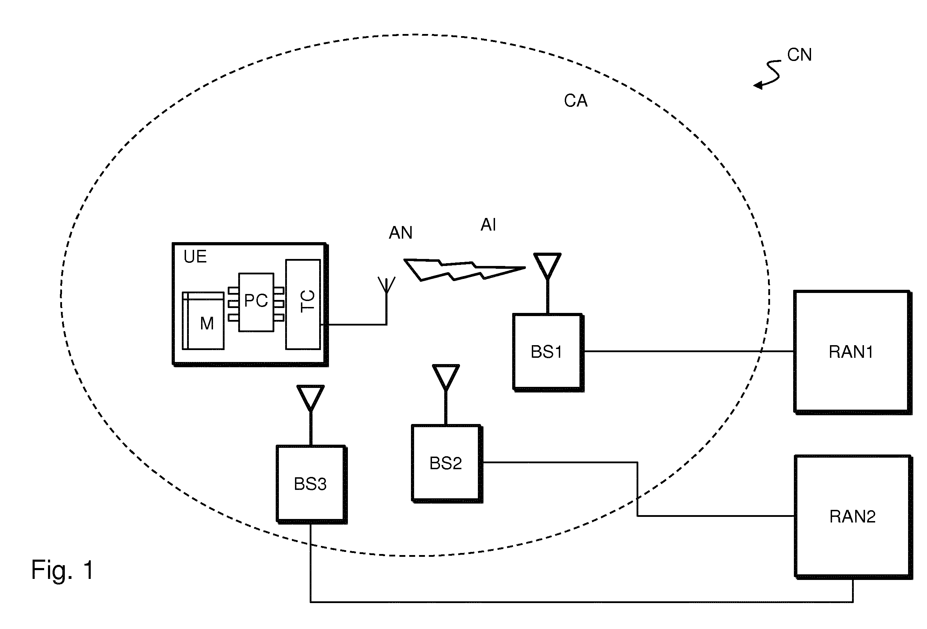

FIG. 1 schematically shows a wireless device UE of the type to which the present invention is applied as an embodiment. The wireless device is configured to operate with a radio access network RAN1 of a cellular network CN by means of a base station BS1 over the air interface Al.

The wireless device UE in particular comprises processing circuitry PC, transceiver circuitry TC, a memory M and an antenna AN. The memory is configured to store programs executable by the processing circuitry and/or results of measurements. Preferably the wireless device comprises volatile and permanent memory.

The wireless device is in particular a machine-type communication (MTC) device, like a metering device. Such devices typically comprise additionally a communication terminal (a so-called M2M module) and a control appliance controlling the communication terminal. The communication terminal comprises all components necessary for setting up a communication over the air interface, like the components mentioned above for the wireless device, while the control appliances in particular comprises additional processing circuitry and memory, and potentially a user interface, power supply etc. The wireless device is now configured to operate only with one of a plurality of base stations BS1 of the radio access network RAN1, which implements the 2G technology standard.

In the cell area CA of base station BS1 there are in fact other base stations BS2, BS3 available which are assigned to a 3G radio access network RAN2, which is not supported by the wireless device UE.

When switching on the wireless device UE it is now important to first figure out which base stations are available in the proximity of the wireless device. As the wireless device might be moved since last power down, the wireless device first has the task to scan the whole frequency band which it can address to detect in which frequency area, resp. channels, signals can be measured. The wireless device is up to now blind with respect to in which channels a decodable base station is sending its signals. Such signals in particular comprise broadcast signals, e.g. synchronisation channels, pilot channels and broadcast channels. At least those channels need to be decodable by the wireless device before registering on a base station.

The wireless device UE consequently carries out a power scan, preferably over the whole receivable frequency band, by means of the transceiver circuitry TC.

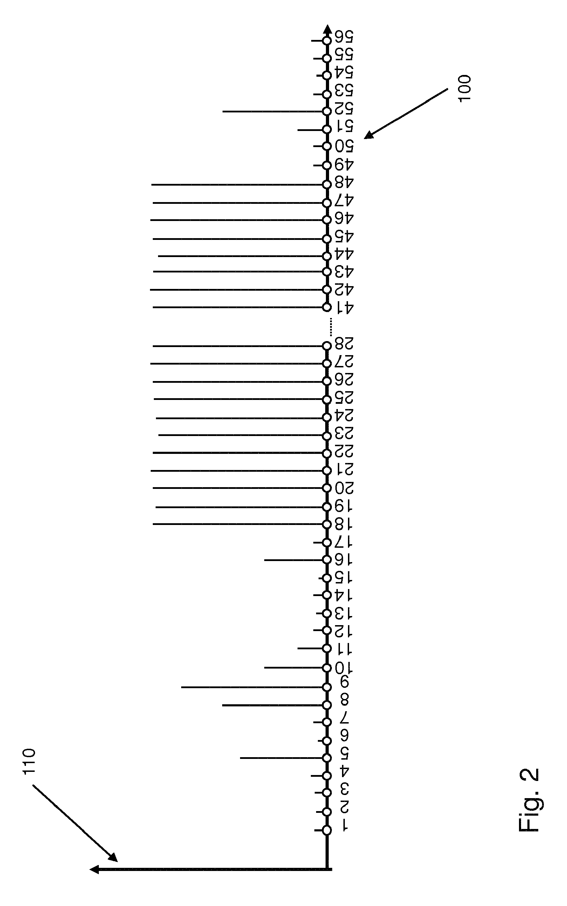

The result of such a power scan is exemplarily shown in FIG. 2. It shows for the channels 1 - 56 of a frequency band on x-axis 100, the power level values in dBm on the y-axis 110. In case of negative dBm values these are preferably transposed to positive values with a higher value indicating a higher power scan value.

As it can be seen, from the channels 1 to 17 and from 49 to 56 the power scan values differ very much, while from channel 18 to 48 the values are on a same high level with more or less constant power levels. A wireless device UE is according to the standard needs supposed to choose the 30 channels with the highest power levels and try to decode them. In the case of the shown power scan these 30 channels are all among the channels 18 to 48. The problem with that is, that the block between channel 18 and 48 is fully occupied by 3G channels which show high values due to code division multiplexing. With a 4G base station nearby similar blocks would appear but probably with a larger expansion.

In fact, the wireless device is looking for a channel of a 2G base station, and this is most likely outside of the block with the 30 strongest channels, e.g. channels 8 or 9 could form beacon channels of 2G like a BCCH.

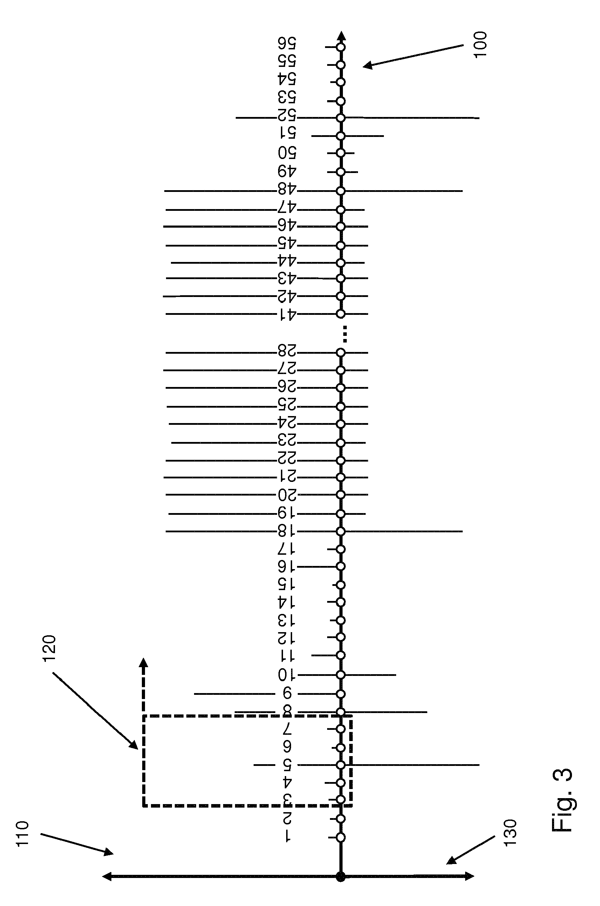

In FIG. 3 it is shown for the power scan of FIG. 2 the result of carrying out a preferred embodiment of present inventive method. The result is shown on axis 130, which for clarity reasons is drawn in the negative quadrant, but shows the scaled value which would work in positive / absolute as well.

The scaled values of the channels 1 - 56 is calculated by consecutively moving a sliding window 120 over the channels. As it is shown it calculates the scaled value for channel 5.

The calculation is based on the average power scan value of the two preceding channels 3, 4 and the two succeeding channels 6, 7, and preferably plus the average value of the channel 5 as well.

Then the (equally transposed) power scan value of channel 5 is compared with the just calculated average over the sliding window 120 for calculating a variability index. The variability index is supposed to be higher the more the power scan value of channel 5 differs from the average value. Preferably simply the difference of both values is the variability index for this channel. More elaborate options are also possible, including the variance or standard deviation of the 5-channel probe.

The priority of the channel is preferably derived from the variability index by assigning a threshold value, wherein with a variability index below a certain threshold, the priority is scaled down. Otherwise the priority is constant.

For getting the scaled value 130 for each channel, the power scan value is preferably multiplied with the determined priority for the channel.

The result is as it can be seen on axis 130. Now the two channels 5 and 52 provide the highest scaled values, while the 3G block was scaled down except the border channels 18, 48.

This is due to the fact that the average power level of e.g. the channels 16-20 is way lower than the power level of channel 18 itself. With the variability index the low differences between the channels of the 3G block leads to very low values and consequently to a scaled down priority. Even with a multiplication with the comparable high power level values, the channels 19-47 show a lower scaled value than the majority of channels with a remarkable power level clearly above the noise floor.

The situation with the two border channels 18, 48 would most likely not appear when the variability index would be calculated in the time domain, that means over a number of consecutive power scans over the evaluated channel. By this way the low variability of a 3G block would fully be visible. With the sliding window 120 the pattern matching over the whole power scan is achieved, and where the pattern matches, which means a block with low variability is found, the priority is scaled down.

In effect now the channels 5, 8, 10, 18, 49 and 52 are on the leading ranks in the evaluation list for finding a 2G base station. Consequently the wireless device UE will test these channels for decoding and most likely find an appropriate base station among these.

For camping on a 2G base station it is preferably searched by the wireless device for a GSM beacon channel resp. C0 carrier. For identifying the GSM beacon channel it is further advantageous to determine the variability over time as it is characterized by a high variability on the channel dimension, and a very low variability in the time dimension. When this pattern is found, it is likely to have found the GSM beacon channel, and therefore an increase in priority is advantageous.

In the above detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the scope of the invention. In addition, it is to be understood that the location or arrangement of individual elements within each disclosed embodiment may be modified without departing from the scope of the invention. The above detailed description is, therefore, not to be taken in a limiting sense, and the scope of the present invention is defined only by the appended claims, appropriately interpreted, along with the full range of equivalents to which the claims are entitled.

## Claims

1. Method for selection of a radio access network (RAN1, RAN2) by a wireless device (UE) comprising limited radio access network capabilities, the method comprising the steps of, for the wireless device:
- carrying out a power scan in at least one frequency band (100) for receiving power scan values (110) from a plurality of channels (1-56) of said frequency band,
- comparing received power scan values with a predefined radio access network power pattern of at least one radio access network, the wireless device (UE) is not designated to operate with,
- in case received power pattern matches with said predefined radio access network power pattern, decreasing the priority of at least one of said channel,
- maintaining an evaluation list of channels including at least one scaled value (130) considering priority and power scan value,
- testing decoding only on a subset of channels out of the evaluation list comprising those channels that provide the highest scaled value considering power scan values taking into account said determined priority.

2. Method according to claim 1,
wherein comparing with the predefined radio access network power pattern comprises stepwise comparing a consecutive line of channels, comprising the step of:
- determining a variability index per channel (1-56) by comparing the power scan value (110) of the evaluated channels with the power scan value of at least one channel in an adjacent frequency,
- identifying a matching between the radio access network power pattern, when the variability index is below a predetermined threshold,
- determining said scaled value in the evaluation list considering said priority taking into account said variability index.

3. Method according to at least one of the previous claims,
wherein comparing received power scan values (110) with the predefined radio access network power pattern comprises considering power scan values of at least one channel (1-56) from a plurality of consecutive power scans,
comprising the step of:
- determining a variability index per channel by comparing the power scan value of the evaluated channel with at least one previously received power scan value of said channel,
- identifying a matching between the radio access network power pattern, when the variability index is below a predetermined threshold,
- determining said scaled value in the evaluation list considering said priority taking into account said variability index.

4. Method according to at least one of the previous claims,
further comprising the step of comparing received channel power scan values with a second power pattern of radio access networks (RAN1) the wireless device (UE) is designed to operate with,
- in case received power pattern matches with said second power pattern, increasing the priority of said plurality of channels.

5. Method according to claim 4,
wherein said second power pattern comprises in case variability index is above a predetermined threshold indicating strong differing power scan values of consecutive channels.

6. Method according to at least one of the previous claims,
wherein the limited radio access network capabilities comprises that the wireless device (UE) is capable of accessing exactly one radio access network (RAN1).

7. Method according to at least one of the previous claims,
wherein a channel (1-56) is not considered for the step of testing decoding under the condition of at least one of the group of:
- the power scan value (110) of said channel is below a predetermined level of noise,
- the priority of the channel is below a predetermined level.

8. Wireless device (UE) configured to operate in a radio access network (RAN1, RAN2), the wireless device comprising a processing circuitry (PC), a memory (M) and a transceiver circuitry (TC) configured to provide limited radio access network capabilities,
wherein the transceiver circuitry is configured:
- to carry out a power scan in at least one frequency band (100) for receiving power scan values (110) from a plurality of channels (1-56) of said frequency band,
further the processing circuitry is configured:
- to compare received channels power scan values with a predefined radio access network power pattern of such radio access network, the wireless device is not designated to operate with,
- to decrease the priority of said plurality of channels, in case received power pattern matches with said predefined radio access network power pattern,
- to maintain in said memory an evaluation list of channels including at least one scaled value (130) considering priority and power scan value,
- to instruct transceiver circuitry to test decoding only on a subset of channels out of the evaluation list comprising of those channels that provide the highest scaled value considering values power scan values taking into account said determined priority.

9. Wireless device (UE) according to claim 8,
wherein to compare with the predefined radio access network power pattern comprises stepwise comparison of a consecutive line of channels, whereby processing circuitry is further configured to:
- determine a variability index per channel (1-56) by comparing the power scan value (110) of the evaluated channels with the power scan value of at least one channel in an adjacent frequency,
- identify a matching between radio access network power pattern, when the variability index is below a predetermined threshold,
- determine said scaled value in said evaluation list considering said priority taking into account said variability index.

10. Wireless device (UE) according to at least one of the claims 8 or 9, further configured to store received power scan values (110) in said memory (M),
wherein to compare the received power scan value with the predefined radio access network power pattern comprises considering power scan values of at least one channel (1-56) from a plurality of consecutive power scans, whereby processing circuitry (PC) is further configured to:
- determine a variability index per channel by comparing the power scan value of the evaluated channel with at least one previous power scan value of said channel stored in said memory,
- identify a matching between radio access network power pattern, when the variability index is below a predetermined threshold,
- determine said scaled value in said evaluation list considering said priority taking into account said variability index.

11. Wireless device (UE) according to at least one of the claims 8 to 10, wherein the processing circuitry (PC) is further configured to compare received channel power scan values with a second power pattern of radio access networks (RAN1) the wireless device is designed to operate with, and in case received power pattern matches with said second power pattern, to increase the priority of said plurality of channels.

12. Wireless device (UE) according to claim 11,
wherein comparing said second power pattern comprises in case variability index is above a predetermined threshold to indicate a strong differing power scan values of consecutive channels.

13. Wireless device (UE) according to at least one of the claims 8 to 12, wherein the limited radio access network capabilities comprises that the wireless device is capable of accessing exactly one radio access network (RAN1).

14. Wireless device (UE) according to at least one of the claim 8 to 13, wherein the processing circuitry is configured not to consider a channel for said testing decoding under the condition of at least one of:
- the power scan value (110) of said channel is below a predetermined level of noise,
- the priority of the channel is below a predetermined level.
